# EUROPÄISCHE PATENTSCHRIFT

(11) **EP 1 911 503 B1**
(45) Veröffentlichungstag und Bekanntmachung des Hinweises auf die Patenterteilung: **06.01.2010**
(21) Anmeldenummer: 07114055.2
(22) Anmeldetag: 09.08.2007
(51) Int. Cl.: B01D 46/02

(54) **Filtereinrichtung, insbesondere zur Filtration von Verbrennungsluft in Brennkraftmaschinen**
Filter device, in particular for filtering combustion air in combustion engines
Dispositif de filtrage, en particulier destiné à la filtration d'air de combustion dans des moteurs à combustion interne

(30) Priorität: 27.09.2006 DE 102006045985
(43) Veröffentlichungstag der Anmeldung: 16.04.2008
(73) Patentinhaber: MANN+HUMMEL GmbH, 71638 Ludwigsburg (DE)
(72) Erfinder: Walz, Stefan, 71634, Ludwigsburg (DE)

(56) Entgegenhaltungen:
- WO-A-2005/095783
- WO-A-2005/096423
- WO-A-2007/062715
- WO-A-2007/096280
- DE-C- 704 629

## Beschreibung

### Technisches Gebiet

Die Erfindung bezieht sich auf eine Filtereinrichtung, insbesondere zur Filterung von Verbrennungsluft in Brennkraftmaschinen, nach dem Oberbegriff des Anspruches 1.

### Stand der Technik

In der WO 2005/095783 A1 wird eine Filtereinrichtung zur Filterung von Verbrennungsluft für eine Brennkraftmaschine beschrieben, wobei die Filtereinrichtung als Filterelement eine Mehrzahl von Filterschläuchen umfasst, die von einer Gehäuseabdeckung überdeckt sind. Die Filterwandungen der Filterschläuche bestehen aus einem porösen Filtermaterial. An der Außenseite der Filterschläuche strömt die in den Motorraum eingeführte Umgebungsluft radial ein, wobei in der Luft mitgeführte Schmutzpartikel sich an der Außenseite der Filterschläuche ablagern können. Die gereinigte Luft wird in den Filterschläuchen axial abgeleitet und einer Luftsammelbox zugeführt, die mit den Zylindereinlässen der Brennkraftmaschine verbunden ist. Da mehrere Filterschläuche vorgesehen sind, ist die Filterfläche ausreichend groß, um den Druckabfall zwischen Roh- und Reinseite gering zu halten.

Derartige Filterelemente müssen in regelmäßigen Abständen gewartet werden, da die Filtrationsleistung aufgrund der Verschmutzung der Filtrierwandung an der Rohseite nachlässt bzw. der Druckabfall zwischen Roh- und Reinseite immer weiter ansteigt.

### Offenbarung der Erfindung

Der Erfindung liegt die Aufgabe zugrunde, mit einfachen konstruktiven Maßnahmen eine Filtereinrichtung zu schaffen, die einen einfachen Wechsel des Filterelementes bei zugleich großen Gestaltungsmöglichkeiten im Hinblick auf die Filtergeometrie erlaubt.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung weist ein als Filterschlauch ausgeführtes Filterelement auf, dessen Filterwandung die Rohseite von der Reinseite radial separiert. Zur Reinigung des Fluids wird die Filterwandung radial durchströmt, wobei grundsätzlich sowohl eine Durchströmung radial von außen nach innen als auch in Gegenrichtung, also radial von innen nach außen möglich ist.

Der Filterschlauch ist in einem Trägerrohr aufgenommen, wobei zwischen dem Außenmantel des Filterschlauchs und dem Innenmantel des Trägerrohrs ein Ringraum für die Strömung des Fluids gebildet ist. Das Trägerrohr ist Bestandteil des Filtergehäuses bzw. bildet das Filtergehäuse. Aufgrund der Ausführung des Filterelementes als Filterschlauch kann dieser flexibel in Trägerrohren unterschiedlicher Geometrie geführt werden. Der Filterschlauch besteht zweckmäßig aus einem weichen, nachgiebigen Filtermaterial aus Vlies und weist eine hohe Flexibilität auf, die insbesondere eine Biegung in Querrichtung ermöglicht. Oder aber das Filtermaterial ist in sich steif und das Element ist in einer Faltenform ausgeführt, die der Flexibilität Rechnung trägt. Aufgrund der Flexibilität können gleichartige Filterschläuche für unterschiedliche Geometrien des Trägerrohres eingesetzt werden. Als Material für den Filterschlauch werden bevorzugt synthetische Werkstoffe auf Polymerbasis verwendet, wobei grundsätzlich auch natürliche Werkstoffe auf Zellulosebasis in Betracht kommen.

Der Ringraum zwischen Außenmantel des Filterschlauchs und Innenmantel des Trägerrohrs erlaubt die Strömung des Fluids in Achsrichtung des Trägerrohrs, wobei dieser Ringraum sowohl die Rohseite als auch die Reinseite der Filtereinrichtung darstellen kann. Bei einer Ausführung als Rohseite wird die herangeführte Verbrennungsluft in diesen Ringraum eingeleitet, von wo aus die Filterwandung radial von außen nach innen durchströmt wird und Schmutzpartikel an der Außenseite des Filterschlauches sich absetzen können. Da eine axiale Abströmung am gegenüberliegenden stirnseitigen Ende der Rohseite nicht möglich ist, weil diese Stirnseite verschlossen ist, ist die Verbrennungsluft gezwungen, den radialen Weg über die Wandung des Filterschlauches zu nehmen. Gleiches gilt, wenn die Ringwandung als Reinseite ausgeführt ist und die Verbrennungsluft über den Innenraum des Filterschlauches zugeführt wird. In diesem Fall stellt der Innenraum des Filterschlauches die Rohseite dar und das ungefilterte Fluid strömt radial von innen nach außen in den umgebenden Ringraum, der die Reinseite darstellt. Aus dem Ringraum kann das gefilterte Fluid axial abströmen.

Des Weiteren ist bei der erfindungsgemäßen Filtereinrichtung der Filterschlauch lösbar im Trägerrohr gehalten. Dieses Merkmal ist Voraussetzung für die Auswechselbarkeit des Filterschlauches, wobei keine Notwendigkeit besteht, auch das Trägerrohr aus seiner Einbaulage entfernen zu müssen. Vielmehr reicht es aus, den Filterschlauch bei unveränderter Lage des Trägerrohres aus diesem herauszuziehen. Dies erfolgt in der Weise, dass der im Trägerrohr befindliche und auszutauschende Filterschlauch an einem Schlauchende mit einem zweiten Filterschlauch verbunden wird, woraufhin der auszutauschende Filterschlauch am anderen, gegenüberliegenden Schlauchende aus dem Trägerrohr herausgezogen wird. Aufgrund der Verbindung zwischen den beiden Filterschläuchen wird der neue, unbeladene Austausch-Filterschlauch automatisch mit dem Herausziehen des ersten, beladenen Filterschlauches in das Trägerrohr hineingezogen. Nach dem vollständigen Herausziehen des ersten Filterschlauches befindet sich der zweite Filterschlauch im Trägerrohr, woraufhin die Verbindung zwischen beiden Schläuchen gelöst werden kann.

Die Verbindung zwischen den beiden Schläuchen erfolgt mithilfe eines Verbindungselementes, welches an den Schlauchenden der beiden Schläuche zu befestigen ist. Dieses Verbindungselement muss durch das Trägerrohr hindurchzuführen sein, es darf also keine größere Querschnittsgeometrie aufweisen als der Innendurchmesser des Trägerrohres, oder aber in einem Mindestmaß komprimierbar oder flexibel ausgeführt sein. Zugleich kann das Verbindungselement, gemäß einer weiteren vorteilhaften Ausführung, ein Befestigungsteil zum Fixieren des aktuell im Trägerrohr befindlichen Filterschlauches dienen, so dass der Filterschlauch axial im Trägerrohr und gegebenenfalls auch radial gehalten ist, wobei im letzteren Fall das Verbindungs- bzw. Befestigungsteil auch die Aufgabe eines Abstandselementes zur Fixierung des radialen Abstandes zwischen Filterschlauch und Innenmantel des Trägerrohres übernimmt.

Unabhängig von dem Verbindungselement kann es aber vorteilhaft sein, Abstandselemente vorzusehen, über die der Filterschlauch im Trägerrohr auf Abstand zum Innenmantel des Trägerrohrs gehalten wird. Diese Abstandselemente müssen aber ein axiales Gleiten des Filterschlauchs im Trägerrohr ermöglichen, um zu gewährleisten, dass der Filterschlauch für Wartungszwecke ausgewechselt werden kann.

Gemäß einer vorteilhaften Weiterbildung ist vorgesehen, dass die Abstandselemente von Falten im Filterschlauch gebildet sind, deren radial außen liegende Spitzen am Innenmantel des Trägerrohrs anliegen und hierdurch den Filterschlauch im Trägerrohr radial stabilisieren. Zugleich ist noch ein ausreichend großer Ringraum zwischen Trägerrohr und Filterschlauch gegeben und damit im Ringraum eine Strömung des Fluids möglich, da lediglich die Spitzen der Falten am Innenmantel des Trägerrohres anliegen.

Gemäß einer weiteren vorteilhaften Ausführung weisen diese Falten Kanten auf, die gegenüber der Filterlängsachse einen Winkel einschließen, also eine Komponente in Umfangsrichtung besitzen. Falten mit dieser Orientierung verleihen dem Filterschlauch zum einen eine große Stabilität, ohne die Flexibilität des Filterschlauches einzuschränken, zum andern vergrößert sich die Filterfläche bei vergleichbarer Länge des Filterschlauches. Der Filterschlauch kann axial sowohl gelängt als auch gestaucht werden und nimmt wieder seine ursprüngliche Form bzw. Länge ein, sobald äußere Kräfte wegfallen. Außerdem kann dieser Filterschlauch auch sehr gut in Querrichtung verformt werden.

Grundsätzlich möglich ist aber auch eine Ausführung des Filterschlauchs mit glatter und faltenfreier Wandung. Auch in dieser Ausführung besitzt der Filterschlauch, der aus einem weichen und nachgiebigen Filtermaterial besteht, ein hohes Maß an Flexibilität in Querrichtung.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 in schematischer Darstellung den Motorraum eines Kraftfahrzeugs bei geöffneter Haube mit darin angeordneter Filtereinrichtung zur Filtration der Verbrennungsluft, wobei die Filtereinrichtung als Trägerrohr mit darin aufgenommenem Filterschlauch ausgebildet ist,

Fig. 2 in schematischer Darstellung die Filtereinrichtung mit Trägerrohr und Filterschlauch,

Fig. 3 ebenfalls in schematischer Darstellung die Filtereinrichtung mit im Austausch befindlichem Filterschlauch, dessen Schlauchende über ein Verbindungselement mit einem zweiten, als Ersatz fungierenden Filterschlauch verbunden ist.

### Ausführungsformen der Erfindung

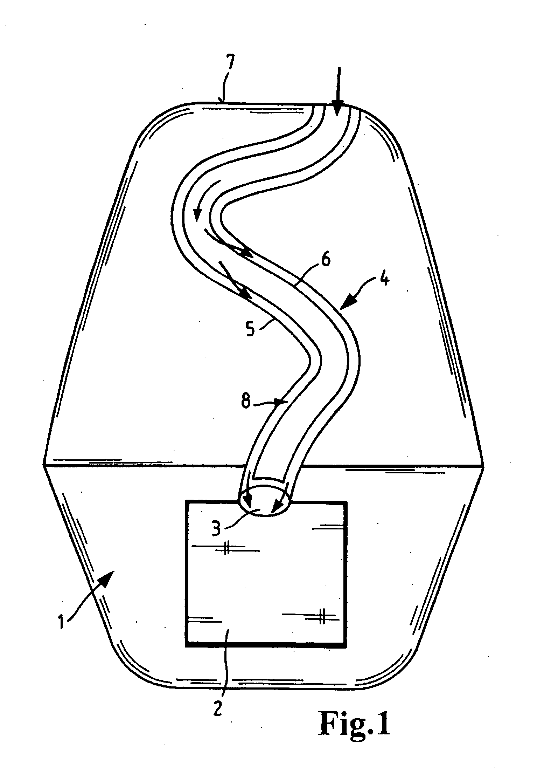

In Fig. 1 ist der Motorraum 1 eines Kraftfahrzeugs mit darin angeordneter Brennkraftmaschine 2 dargestellt. Der Brennkraftmaschine 2 wird über eine Öffnung 3 gefilterte Verbrennungsluft zugeführt, die in einer Filtereinrichtung 4, welche der Öffnung 3 vorgelagert ist, gefiltert wird. Die Filtereinrichtung 4 besteht aus einem Trägerrohr 5, das die Funktion eines Filtergehäuses übernimmt, und einem im Trägerrohr angeordneten Filterschlauch 6, der sich über die axiale Länge des Trägerrohrs 5 erstreckt. Sowohl das Trägerohr 5 als auch der Filterschlauch 6 besitzen vorteilhaft einen runden Querschnitt, der zwischen elliptischer und kreisrunder Ausformung liegen kann, wobei der Außendurchmesser des Filterschlauches 6 kleiner ist als der Innendurchmesser des Trägerrohres 5, so dass zwischen dem Außenmantel des Filterschlauches 6 und dem Innenmantel des Trägerrohres 5 ein Ringraum 8 gebildet ist, der sich zwischen den axialen Stirnseiten der Filtereinrichtung erstreckt und einen Strömungsraum für das Fluid, also die Verbrennungsluft darstellt. Das Trägerrohr 5 mit dem Filterschlauch 6 verläuft zwischen der Fahrzeugfront 7 des Kraftfahrzeuges und der Öffnung 3 zu den Einlasskanälen der Brennkraftmaschine 2. Verbrennungsluft, die die Fahrzeugfront 7 anströmt, wird zweckmäßigerweise in das Innere des an dieser Seite offenen Filterschlauches 6 eingeleitet. Die gegenüberliegende, axiale Stirnseite des Filterschlauches, die der Öffnung 3 benachbart ist, ist dagegen verschlossen, so dass die eingeführte und noch ungefilterte Verbrennungsluft gezwungen ist, den radialen Weg von innen nach außen durch die Wandung des Filterschlauches 6 zu nehmen, wodurch die Filterung an der Innenseite der Filterwandung stattfindet. Die gereinigte Verbrennungsluft wird anschließend axial über den Ringraum 8 der Brennkraftmaschine 2 zugeführt. Auf der der Brennkraftmaschine 2 zugewandten Seite ist das Trägerrohr 5 geöffnet, auf der der Fahrzeugfront 7 zugewandten Seite dagegen verschlossen.

Aufgrund der vielfältigen Möglichkeiten im Hinblick auf die geometrische Form des Trägerrohres 5 stellt die Ausführung gemäß Fig. 1 nur ein Ausführungsbeispiel dar, das im Prinzip beliebig abgewandelt werden kann. Die große Flexibilität des Filterschlauches 6 in dem Trägerrohr 5 ermöglicht die Verwendung von Filterschläuchen als Gleichteile für eine Vielzahl unterschiedlicher Trägerrohrgeometrien.

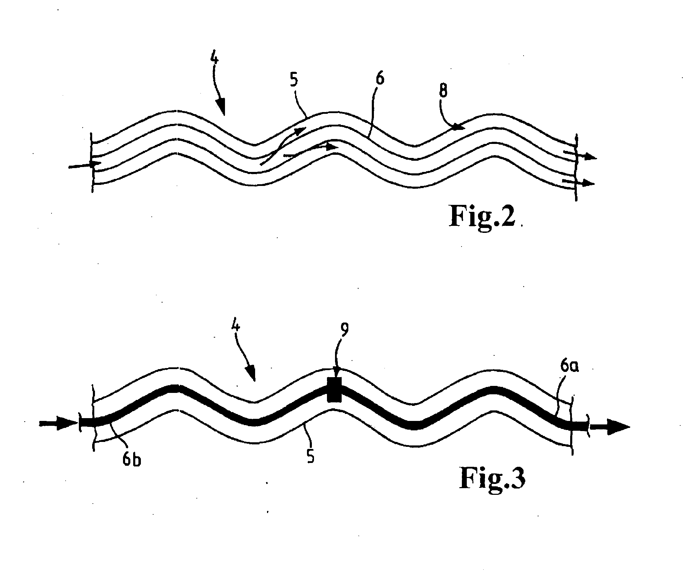

In Fig. 2 ist die Filtereinrichtung 4 in Einzeldarstellung gezeigt. Der Ringraum 8 zwischen Außenmantel des Filterschlauches 6 und Innenmantel des Trägerrohres 5 fungiert als Reinseite, über die die gereinigte, durch die Filterwandung des Schlauches 6 hindurchgetretene Verbrennungsluft axial abgeführt wird. Möglich ist aber auch eine Umkehrung der Strömungsverhältnisse, indem der Ringraum 8 als Rohseite fungiert, über die die unfiltrierte Verbrennungsluft zugeführt wird. Aus dem Ringraum 8 tritt in diesem Fall die Verbrennungsluft durch die Wandung des Filterschlauches 6 radial von außen nach innen hindurch und wird über das Innere des Filterschlauches, das in diesem Fall den Reinraum darstellt, axial abgeleitet. In beiden Ausführungsvarianten wird die unfiltrierte Verbrennungsluft zunächst axial in die Filtereinrichtung 4 eingeleitet, anschließend muss diese die Filterwandung des Filterschlauches 6 radial durchströmen.

In Fig. 3 ist eine Filtereinrichtung 4 dargestellt, deren verschmutzter Filterschlauch 6a durch einen unverschmutzten und unverbrauchten Austausch-Filterschlauch 6b ersetzt wird. Um den Filterschlauchwechsel ohne Entnahme des Trägerrohres 5 aus der Einbaulage bewerkstelligen zu können, wird ein Verfahren angewandt, bei dem das eine Schlauchende des alten, verschmutzten Filterschlauches 6a über ein Verbindungselement 9 mit dem Schlauchende des neuen, unverschmutzten Filterschlauches 6b verbunden wird. Anschließend wird der alte Filterschlauch an seinem dem Verbindungselement 9 abgewandten Schlauchende aus dem Trägerrohr 5 herausgezogen. Aufgrund der Verbindung mit dem neuen Filterschlauch 6b mittels des Verbindungselementes 9 wird zugleich der neue Filterschlauch 6b in das Trägerrohr 5 eingezogen. Sobald der alte Filterschlauch 6a vollständig aus dem Trägerohr 5 entnommen ist, befindet sich der neue Filterschlauch 6b automatisch in seiner korrekten Position innerhalb des Trägerrohres 5. Daraufhin kann der alte Filterschlauch 6a vom Verbindungselement 9 gelöst werden. Das Verbindungselement 9 kann entweder auch vom neuen Filterschlauch 6b gelöst und aus der Filtereinrichtung 4 entnommen werden, oder, gemäß einer alternativen Ausführung, an Ort und Stelle im Trägerrohr verbleiben und den neuen Filterschlauch 6b in Bezug auf das Trägerrohr 5 fixieren. In dieser Funktion stellt das Verbindungselement ein Befestigungsteil dar, außerdem wird auch der radiale Abstand des Filterschlauches in Bezug auf die Innenwand des Trägerrohres 5 festgelegt.

Die Filtereinrichtung eignet sich insbesondere für die Filtration von Verbrennungsluft in Brennkraftmaschinen. Es ist aber auch eine Anwendung für die Filtration der Fahrzeuginnenraumluft oder allgemein für die Filtration in Fahrzeugen möglich.

## Patentansprüche

1. Filtereinrichtung, insbesondere zur Filtration von Verbrennungsluft in Brennkraftmaschinen, mit einem als Filterschlauch (6) ausgebildeten Filterelement, dessen Filterwandung die Roh- von der Reinseite radial separiert, wobei der Filterschlauch (6) in einem Trägerrohr (5) aufgenommen ist, und wobei zwischen dem Außenmantel des Filterschlauchs (6) und dem Innenmantel des Trägerrohrs (5) ein Ringraum (8) für die Strömung des Fluids gebildet und der Filterschlauch (6) lösbar im Trägerrohr (5) gehalten ist, **dadurch gekennzeichnet, dass** ein Verbindungselement (9) zum Filterschlauchwechsel vorgesehen ist, wobei das Verbindungselement (9) an einem Schlauchende eines verschmutzten Filterschlauches (6a) befestigt und zugleich an einem Schlauchende eines unverschmutzten Filterschlauches (6b) befestigbar ist, wobei durch Herausziehen des verschmutzten Filterschlauches (6a) an seinem, dem Verbindungselement (9) abgewandten Schlauchende, der unverschmutzte Filterschlauch (6b) in das Trägerrohr (5) einziehbar ist, und wobei das Verbindungselement (9) durch das Trägerrohr (5) hindurchführbar ist.

2. Filtereinrichtung nach Anspruch 1, **dadurch gekennzeichnet, dass** der Filterschlauch (6) im Trägerrohr (5) mittels Abstandselementen auf Abstand zum Innenmantel des Trägerrohrs (5) gehalten ist, wobei die Abstandselemente ein axiales Gleiten des Filterschlauchs (6) im Trägerrohr (5) erlauben.

3. Filtereinrichtung nach Anspruch 1 oder 2, **dadurch gekennzeichnet, dass** das Verbindungselement (9) zusätzlich als Befestigungsteil zum Fixieren des Filterschlauches (6a, 6b) im Trägerrohr (5) ausgebildet ist.

4. Filtereinrichtung nach einem der Ansprüche 1 bis 3, **dadurch gekennzeichnet, dass** der Filterschlauch (6) eine glatte, faltenfreie Filterwandung aufweist.

5. Filtereinrichtung nach einem der Ansprüche 1 bis 3, **dadurch gekennzeichnet, dass** in die Filterwandung des Filterschlauchs (6) Falten eingebracht sind.

6. Filtereinrichtung nach Anspruch 5, **dadurch gekennzeichnet, dass** die Falten in der Filterwandung Faltenkanten aufweisen, die mit der Filterlängsachse einen Winkel einschließen.

7. Filtereinrichtung nach Anspruch 5 oder 6, **dadurch gekennzeichnet, dass** die Falten die Abstandselemente bilden und die radial außen liegenden Spitzen der Falten am Innenmantel des Trägerrohrs (5) anliegen.

8. Verfahren zum Austausch eines Filterschlauchs in einer Filtereinrichtung nach einem der Ansprüche 1 bis 7, **dadurch gekennzeichnet, dass** der im Trägerrohr (5) befindliche, auszutauschende Filterschlauch (6a) an einem Schlauchende mittels des Verbindungselementes (9) mit einem zweiten Filterschlauch (6b) verbunden und der auszutauschende Filterschlauch (6a) am anderen Schlauchende aus dem Trägerrohr (5) herausgezogen wird, wodurch der zweite Filterschlauch (6b) in das Trägerrohr (5) eingezogen wird.

9. Verfahren nach Anspruch 8, **dadurch gekennzeichnet, dass** nach dem Lösen des auszutauschenden Filterschlauches (6a) von dem Verbindungselement (9), das Verbindungselement (9) den Filterschlauch (6b) in dem Trägerrohr (5) fixiert.

## Claims

1. Filtering device, in particular for filtering combustion air in internal combustion engines, with a filter element designed as filter hose (6), the filter wall of the filter element separating the entry side from the clean side radially, the filter hose (6) being incorporated into a carrier tube (5), an annular space (8) for the fluid flow being formed between the outer shell of the filter hose (6) and the inner shell of the carrier tube (5) and the filter hose (6) being held detachably in the carrier tube (5), **characterized in that** a connecting element (9) is provided for the filter hose exchange, the connecting element (9) being attached to one hose end of a contaminated filter hose (6a) and at the same time being attachable to one hose end of an uncontaminated filter hose (6b), and by pulling out the contaminated filter hose (6a) at its hose end that faces away from the connecting element (9) the uncontaminated filter hose (6b) can be inserted into the carrier tube (5), and the connecting element (9) can be pulled through the carrier tube (5).

2. Filtering device according to claim 1, **characterized in that** the filter hose (6) is held in the carrier tube (5) by means of spacer elements at a certain distance to the inner shell of the carrier tube (5), the spacer elements permitting an axial sliding of the filter hose (6) in the carrier tube (5).

3. Filtering device according to claim 1 or 2, **characterized in that** the connecting element (9) is additionally designed as attachment part for attaching the filter hose (6a, 6b) in the carrier tube (5).

4. Filtering device according to one of the claims 1 to 3, **characterized in that** the filter hose (6) features a smooth filter wall free of pleats.

5. Filtering device according to one of the claims 1 to 3, **characterized in that** pleats are incorporated into the filter wall of the filter hose (6).

6. Filtering device according to claim 5, **characterized in that** the pleats in the filter wall feature folding edges which include an angle with the longitudinal filter axis.

7. Filtering device according to claim 5 or 6, **characterized in that** the pleats form the spacer elements and that the radially outside located tips of the pleats butt against the inner shell of the carrier tube (5).

8. Method for exchanging a filter hose in a filtering device according to one of the claims 1 to 7, **characterized in that** the filter hose (6a) to be exchanged which is in the carrier tube (5) is connected at one hose end by means of the connecting elements (9) with a second filter hose (6b) and that the filter hose (6a) to be exchanged is pulled out of the carrier tube (5) at the other hose end, thus pulling the second filter hose (6b) into the carrier tube (5).

9. Method according to claim 8, **characterized in that** after detaching the filter hose (6a) to be exchanged from the connecting element (9), the connecting element (9) attaches the filter hose (6b) in the carrier tube (5).

## Revendications

1. Dispositif de filtration, en particulier pour la filtration d'air de combustion dans des moteurs à combustion interne, avec un élément filtrant conformé en tuyau de filtration (6) et dont la paroi filtrante sépare radialement le côté brut et le côté filtré, le tuyau filtrant (6) étant logé dans un tube porteur (5), et un espace annulaire (8) pour l'écoulement du fluide étant formé entre l'enveloppe extérieure du tuyau filtrant (6) et l'enveloppe intérieure du tube porteur (5) et le tuyau filtrant (6) étant tenu de façon amovible dans le tube porteur (5), **caractérisé en ce qu'**un élément de raccordement (9) est prévu pour le remplacement du tuyau filtrant, l'élément de raccordement (9) étant fixé à une extrémité d'un tuyau filtrant (6a) encrassé et pouvant être fixé simultanément à une extrémité d'un tuyau filtrant (6b) non encrassé, le tuyau filtrant non encrassé (6b) pouvant être rentré dans le tube porteur (5) par extraction du tuyau filtrant encrassé (6a) au niveau de son extrémité de tuyau opposée à l'élément de raccordement (9), et l'élément de raccordement (9) pouvant passer à travers le tube porteur (5).

2. Dispositif de filtration selon la revendication 1, **caractérisé en ce que** le tuyau filtrant (6) est tenu dans le tube porteur (5) au moyen d'éléments entretoise à une certaine distance de l'enveloppe intérieure du tube porteur (5), les éléments entretoise autorisant un glissement axial du tuyau filtrant (6) dans le tube porteur (5).

3. Dispositif de filtration selon la revendication 1 ou 2, **caractérisé en ce que** l'élément de raccordement (9) est également conformé comme partie de fixation pour fixer le tuyau filtrant (6a, 6b) dans le tube porteur (5).

4. Dispositif de filtration selon l'une des revendications 1 à 3, **caractérisé en ce que** le tuyau filtrant (6) présente une paroi filtrante lisse et dépourvue de plis.

5. Dispositif de filtration selon l'une des revendications 1 à 3, **caractérisé en ce que** des plis sont réalisés dans la paroi filtrante du tuyau filtrant (6).

6. Dispositif de filtration selon la revendication 5, **caractérisé en ce que** les plis dans la paroi filtrante présentent des arêtes qui forment un angle avec l'axe longitudinal du filtre.

7. Dispositif de filtration selon la revendication 5 ou 6, **caractérisé en ce que** les plis forment les éléments entretoise et les pointes des plis situées à l'extérieur en sens radial s'appuient contre l'enveloppe intérieure du tube porteur (5).

8. Procédé de remplacement d'un tuyau filtrant dans un dispositif de filtration selon l'une des revendications 1 à 7, **caractérisé en ce que** le tuyau filtrant (6a) situé dans le tube porteur (5) et devant être remplacé est relié à une extrémité de tuyau, au moyen de l'élément de raccordement (9), avec un deuxième tuyau filtrant (6b) et que le tuyau filtrant (6a) devant être remplacé est extrait du tube porteur (5) au niveau de l'autre extrémité de tuyau, de sorte que le deuxième tuyau filtrant (6b) est rentré dans le tube porteur (5).

9. Procédé selon la revendication 8, **caractérisé en ce qu'**après le désassemblage du tuyau filtrant (6b) à remplacer de l'élément de raccordement (9), l'élément de raccordement (9) fixe le tuyau filtrant (6b) dans le tube porteur (5).
